# EUROPEAN PATENT SPECIFICATION

(11) **EP 3 061 660 B1**
(45) Date of publication and mention of the grant of the patent: **09.08.2017**
(21) Application number: 15156672.6
(22) Date of filing: 26.02.2015
(51) Int. Cl.: B60T 7/18, F16D 65/00

(54) **ENHANCED BRAKE DISC WIPING FUNCTIONALITY FOR VEHICLES WITH BRAKE-BY-WIRE SYSTEMS**
VERBESSERTE BREMSSCHEIBENWISCHFUNKTIONALITÄT FÜR FAHRZEUGE MIT BRAKE-BY-WIRE-SYSTEMEN
FONCTIONNALITÉ D'ESSUYAGE AMÉLIORÉE DE DISQUE DE FREIN POUR VÉHICULES AVEC DES SYSTÈMES DE FREINAGE PAR CÂBLE

(43) Date of publication of application: 31.08.2016
(73) Proprietor: Ford Global Technologies, LLC, Dearborn, MI 48126 (US)
(72) Inventor: Svensson, Thomas, 42799 Leichlingen (DE); Jurkiw, Tim, Macomb, MI, 48042 (US); Crombez, Dale Scott, Livonia, 48150 MI (US); Johnson, Bradley J, Ann Arbor, MI Michigan 48104 (US)
(74) Representative: Illing, Rolf

(56) References cited:
- EP-A2- 2 743 114
- DE-A1- 10 111 076
- DE-A1- 19 846 392
- DE-A1- 19 916 700
- DE-A1- 19 947 903
- DE-A1-102005 019 276
- DE-C1- 4 427 170
- FR-A3- 2 934 343

## Description

The present invention relates to a method of keeping brakes of a vehicle equipped with a brake-by-wire de-coupled brake system in good condition, more in particular for vehicles also comprising a global positioning system (GPS).

Presently non-BBW (non-brake-by-wire) and BBW (brake-by-wire) braking systems may possess the capability to generate slight amounts of brake pressure at all wheel brakes to utilize the brake pads to clean or wipe the rotors. Such a feature may be utilized when it can be determined that the vehicle is or has been in wet conditions. In BBW braking systems that have de-coupled brake pressure generation, this brake disc wiping can be activated at any time (including when the brake pedal is not depressed) within the limits of not wanting to induce excess brake drag while be imperceptible to the driver. Non-BBW systems may accomplish the same function but over a more limited range of operation due to the coupled nature of the brake pressure generation in those systems. In those systems this feature may only be activated when the driver is actively braking, or in special cases such as Autohold due to the fact that pressure generation via the ESC (Electronic Stability Control) pump may result in movement of the brake pedal.

For example, DE 101 11 076 A1 discloses a method of ensuring the braking effect of brake actuators in a vehicle, by regularly, e.g. once every 5 or 10 minutes, removing a film on the brakes by slightly actuating the brakes for removing said film. The activation condition is based on a set of conditions, for example provided that the accelerator pedal is not operated, and the brake pedal is not operated, and the velocity of the vehicle is higher than e.g. 30 km/h, and ABS (Anti-lock Braking System) or Traction Control is not being operated. The activation condition may also include information from the windshield wiper or from a rain sensor. The amount of braking is chosen such that the resulting deceleration is not or barely perceived by the driver.

Another known method is described in EP 1 369 326 A1 disclosing a method of cleaning brakes in winter. The method involves using a capacitive sensor for measuring the thickness of a water film, and a conductive sensor for measuring a salt concentration of the film.

Another known method is WO 2005/021345 A1 disclosing a method of cleaning brakes after a vehicle has been parked for a relatively long period (for example at least 6 hours), and is then used again for a sufficiently long time, thus using hysteresis. The method uses the temperature of the engine or cooling oil and compares it to the ambient temperature to decide whether the engine was used sufficiently long. The cleaning of the brakes is only performed when the vehicle has a sufficient speed, e.g. a speed higher than 30 km/h.

Against this background, the present invention has the object to enhance the use of brake disc wiping in specific scenarios.

This object is achieved by a method having the features of claim 1. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

According to the present invention a method of keeping brakes of a vehicle equipped with a brake-by-wire de-coupled brake system in good condition, the vehicle further comprising a GPS system, comprises the steps of: a) determining whether a brake disc wiping needs to be performed based on information obtained from the GPS system, and if a brake disc wiping needs to be performed, continuing with step b); b) optionally waiting for a suitable moment for performing the brake disc wiping by waiting until a predefined condition is satisfied, and when the predefined conditions is satisfied, continuing with step c); c) performing the brake disc wiping.

It is an advantage of this method that it makes use of modern features of vehicles, in particular the GPS system, for purposes other than their original function (route planning). In this way the base feature of disk wiping is further enhanced. This is especially useful when disk cleaning is not performed on a regular basis (for example every 10 minutes), but only when there are good indications that the brakes may be wet or rust may have formed.

According to an advantageous embodiment of the present invention, step a) comprises determining, using the GPS system, whether the vehicle is at a car wash facility, and if the vehicle is not at a car wash facility, repeating step a), and if the vehicle is at a car wash facility, starting a timer and deciding that a brake disc wiping needs to be performed, and continuing with step b); wherein step b) comprises repeating determining whether a transmission range of the vehicle is other than neutral, or whether a brake pedal is depressed, or whether a value of the timer is larger than a predefined value, until any of these conditions is satisfied, and then continuing with step c).

This scenario is especially directed at cleaning the brakes, because they are wet, shortly after a visit to a car wash.

Determining whether the vehicle is at a car wash facility, using the GPS, may comprise: retrieving an actual position of the vehicle from the GPS system, and retrieving point of interest information from the GPS system, and determining whether the point of interest at the actual position is a car wash.

According to another advantageous embodiment of the present invention, step a) comprises determining, using the GPS system, whether the vehicle is at a parking facility, and determining whether a remote park function (e.g. remote park assist: the vehicle may be remotely parked on and/or remotely retrieved from the parking spot without the driver physically driving the vehicle) is activated, and if the vehicle is not at a parking facility or the remote park function is not activated, repeating step a), and if the vehicle is at a parking facility and the remote park function is activated, performing the following sequence of steps: i) starting a first timer; ii) determining whether a motor of the vehicle is stopped and whether a value of the first timer is larger than a first predefined value; and if the motor of the vehicle is not stopped or the first timer is not larger than a predefined time, repeating step ii), and if the motor of the vehicle is stopped and the first timer is larger than a predefined time, deciding that a brake disk wiping needs be performed, and continuing with step b); and wherein step b) comprises waiting a second predefined period after the car is started again when leaving the parking facility, by performing the following sequence of steps: iii) determining whether the motor of the vehicle is running, and if the motor of the vehicle is not running, repeating step iii), and if the motor of the vehicle is running, starting a second timer, and continuing with step iv); iv) determining whether a value of the second timer is larger than a second predefined period, and if the value of the second timer is not larger than the second predefined value, repeating step iv); and if the value of the second timer is larger than the second predefined value, continuing with step c).

This scenario is especially directed at cleaning the brakes, because they may be wet and rust may have formed, after a relatively long stay in a parking facility. It is advantageous to start the brake cleaning operation already before the car is actually delivered to the driver, because in this way, the brake cleaning is not or less noticeable, and because in this way the brakes are cleaned and ready for use before the vehicle actually hits the road, which is safer.

Determining whether the vehicle is at a parking facility, using the GPS, may comprise: retrieving an actual position of the vehicle from the GPS system, and retrieving point of interest information from the GPS system, and determining whether the point of interest at the actual position is a parking facility.

In yet another advantageous embodiment, wherein the vehicle is further equipped with data communication means, step a) comprises determining past or actual position information of the vehicle from the GPS system, and obtaining weather information for the past or actual position via the data communication means, and if the weather information indicates no presence of precipitation and indicates a value of relative humidity lower than a predefined humidity level at the past or actual position of the vehicle, repeating step a), and if the weather information indicates a presence of precipitation or a value of relative humidity larger than a predefined humidity level at the past or actual position of the vehicle, deciding that a brake disc wiping needs to be performed.

This scenario is especially directed to make use of new technology, in particular data communication technology, such as for example "connected vehicle technology", to enhance the brake wiping function, by using relevant information for deciding whether the brakes need to be cleaned or not, namely: weather information.

In a further advantageous embodiment, step b) may comprise waiting until the motor of the vehicle is switched off, and waiting until the motor is switched on again. It may be advantageous to postpone the actual disk wiping operation until the motor is switched off and ignited again.

In all of the embodiments mentioned above, wherein the vehicle further comprises a sound system, the waiting of step b) may further comprise the following step: v) determining whether the sound system is active and whether a volume of the sound system is above a predefined value; and if the sound system is not active or the volume is not above the predefined value, repeating step v), and if the sound system is active and the volume is above the predefined value, continuing with step c).

It is advantageous to postpone the actual disk wiping operation until the radio or stereo is switched on, and the volume is above a certain threshold, because it allows the brake cleaning to be less perceptible to the driver, in terms of NVH (noise, vibrations and harshness).

Further features and advantages of the present invention will become apparent from the following description of a non-limiting embodiment of the invention which will be explained below with reference to the drawing. In this drawing:

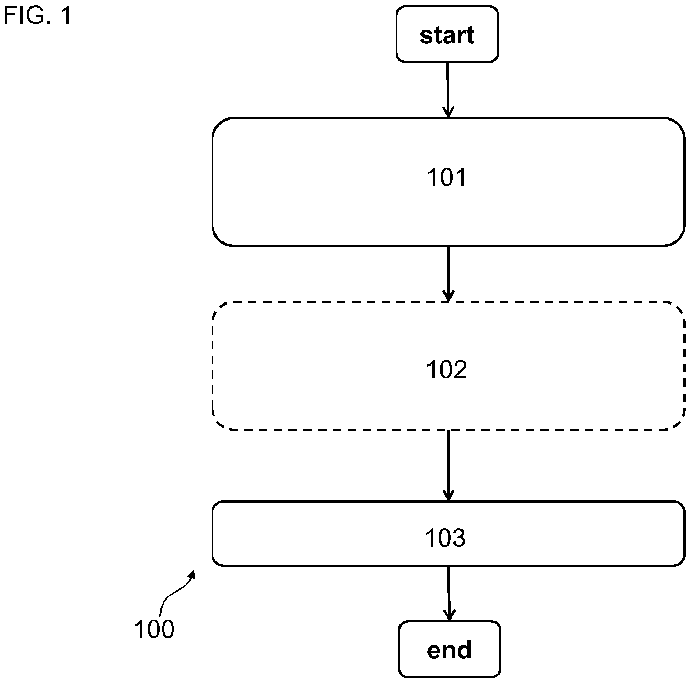

- FIG. 1: is a flow chart demonstrating the steps of a method according to the present invention;

A brake system with de-coupled brake pressure is to be interpreted substantially as a brake system where the entirety of the brake pressure generation during normal operation is accomplished via an electrically driven device, such as a piston pump driven by an electric motor, based upon a measured driver brake pedal input. Such a system typically also includes hydraulic valves that are capable of actuation to perform such functions as electronic stability control, anti-lock braking, and traction control.

Disc brake wiping is to be understood as brake disc wiping and brake disc heating in the entire document.

FIG. 1 shows a flow chart of a method 100 for keeping brakes of a vehicle equipped with a brake-by-wire de-coupled brake system in condition. The method comprises at least two steps: a) deciding whether the brakes need to be cleaned (step 101). In this step, use is made of the GPS system, and c) actually cleaning the brakes by brake disc wiping, in a manner known per se in the art (step 103). Optionally there is an additional step between step a) and step b), namely step b) (step 102) which comprises waiting for a suitable moment before actually cleaning the brakes. It is noted in this respect that in the cited prior art documents, the actual cleaning is postponed until the vehicle has a minimum speed, of for example 30 to 50 km/h, whereas this is not required in embodiments of the present invention.

A first specific scenario is related to cleaning the brakes after a visit to a car wash facility:
For vehicles equipped with a BBW de-coupled brake system and a by-wire transmission range or gear selection power train (may or may not be push-button style), the brake disc wiping feature may additionally be made active in those instances where it can be confirmed that the vehicle is in an automatic car wash. Such by-wire transmission range selection functionality may include a "car-wash indication" when the Neutral range is selected by the driver via the by-wire interface. If such an indication is available it is proposed that the brake disc wiping feature may be activated. When the indication of being in a "car-wash" is given the brake disc wiping feature shall initialize, but shall not perform the wiping function until any of the provided conditions is met:
   - Driver selects a range other than Neutral
   - Driver depresses the brake pedal
   - Timer started when "car wash indication" is provided is > Time threshold set for the average length of time it takes a vehicle to complete an automatic car wash (calibratable). This time may be in the order of 1 to 10 minutes, for example in the order of 2 to 6 minutes.

Once any of the above conditions are satisfied the brake disc wiping feature shall request the necessary pressure to perform the cleaning/wiping of the rotors.

A second specific scenario is related to cleaning the brakes after a (relatively long) storage of the vehicle in a parking facility.

For vehicles equipped with a BBW de-coupled brake system and a remote park assist feature, where the vehicle may be remotely retrieved from the parking spot without the driver physically driving the vehicle, the brake disc wiping feature may be enhanced. Particularly for those instances where the vehicle operator does not drive their vehicle for extended periods of time, such as those who live in major cities and utilize public transit, the brake disc wiping may be utilized to remove corrosion from the brake rotors of the vehicle. When equipped with a remote park assist feature, the vehicle may not be driven by the driver until the remote park assist has completed exiting the parking space. So the brake disc wiping feature shall utilize a stored value for the last time the vehicle has been shut down, and the current time to compare to a calibratable threshold of time to use as part of its activation criteria. When the remote park assist feature is requested to bring the vehicle out of the parking space, the brake disc wiping feature shall compare the delta between the last shutdown time and current time against the threshold. If the delta time period is found to be greater than the threshold (for example at least 6 hours, or at least 24 hours), then the brake disc wiping shall be activated and shall wait to generate brake pressure until the remote park assist event is requested. Once the remote park assist event is in process, the brake disc wiping feature shall generate the necessary brake pressures at an appropriate point during the remote park assist event (for example 10 or 30 seconds after having left the parking space).

A third specific scenario is aimed at vehicles that possess "connected vehicle" technology, in which case an additional set of activation criteria for brake disc wiping is possible. In a connected vehicle where there exists a means to obtain weather data from a national weather service, web-site, or cloud based data exchange, such information can be utilized for activating the brake disc wiping function. For example if it can be determined that the vehicle has been in a location where precipitation forecast was found to be greater than a calibratable %, the brake disc wiping function may be activated independent of wiper activation criteria. In this manner the disc wiping would be provided for those instances where a vehicle can be ascertained to have been driven in (or currently driving in) a wet condition where the driver has not had the need to activate the wipers. This weather data based activation could also include evaluating the vehicles current navigation route (if navigation is active) to prepare for a brake disc wiping if the vehicle is shown to be driving in or through an area of precipitation above some threshold. Such weather data could also be utilized to determine if a brake disc cleaning is warranted after an overnight soak if there was recorded precipitation, or just based on the likely-hood of precipitation. Lastly the relative humidity (compared to a threshold) could be utilized from the weather data along a length of time the vehicle has been soaking (not driving) as pre-conditions to require a brake disc wiping in the next drive/ignition cycle. With such functionality being provided by the connected vehicle architecture, there also may be included back-up routines that would estimate required brake disc wiping based upon the last received weather data particularly for those conditions where the latest data is unable to be retrieved (low signal quality, etc.).

In all of the scenarios listed above, for all instances where the brake disc wiping feature is expected to wipe the brake discs when the driver is present, a further enhancement may be provided to ensure its usage is less perceptible to the driver (and passengers). For this enhancement the brake disc wiping feature shall also receive information as to whether or not the vehicle radio/stereo is on with volume above a calibratable threshold. If it can be confirmed that the radio is on and the volume above the given threshold then the feature may activate, when it can be assumed to be less perceptible in terms of NVH (noise, vibration, harshness).

The proposed functionality provides the following advantages when compared to the current state of the art:
- The proposed functionality provides for a greater range of operation of the brake disc wiping feature particularly for vehicles equipped with advanced/future technologies.
- The proposed functionality allows improved customer satisfaction for by making use of brake disc wiping in specific scenarios where it can help to eliminate both NVH and brake grab.
- The proposed functionality provides enhancements to the base feature to make its use less perceptible to the driver

### List of reference numerals:

- 100: Exemplary embodiment of the method according to the invention
- 101: First step (a determining whether a brake disc wiping needs to be performed based on information obtained from the GPS system)
- 102: Optional second step (b waiting for a suitable moment for performing the brake disc wiping by waiting until a predefined condition is satisfied) optional
- 103: Third step (c performing brake disc wiping)

## Claims

1. A method of keeping brakes of a vehicle equipped with a brake-by-wire de-coupled brake system in condition, the vehicle further comprising a GPS system, the method comprising at least the steps of:
a) determining (101) whether a brake disc wiping needs to be performed based on information obtained from the GPS system, and if a brake disc wiping needs to be performed, continuing with step b) or c),
b) waiting (102) for a suitable moment for performing the brake disc wiping by waiting until a predefined condition is satisfied, and when the predefined conditions is satisfied, continuing with step c);
c) performing (103) the brake disc wiping.

2. The method according to claim 1,
wherein step a) comprises determining (101), using the GPS system, whether the vehicle is at a car wash facility,
- and if the vehicle is not at a car wash facility, repeating step a),
- and if the vehicle is at a car wash facility, starting a timer and deciding that a brake disc wiping needs to be performed, and continuing with step b);
wherein step b) comprises repeating determining (102) whether a transmission range of the vehicle is other than neutral, or whether a brake pedal is depressed, or whether a value of the timer is larger than a predefined value, until any of these conditions is satisfied, and then continuing with step c).

3. The method according to claim 1 or 2,
wherein step a) comprises determining (101), using the GSP system, whether the vehicle is at a parking facility, and determining whether a remote park function is activated,
- and if the vehicle is not at a parking facility or the remote park function is not activated, repeating step a),
- and if the vehicle is at a parking facility and the remote park function is activated, performing the following sequence of steps:
i) starting a first timer;
ii) determining whether a motor of the vehicle is stopped and whether a value of the first timer is larger than a first predefined value;
- and if the motor of the vehicle is not stopped or the first timer is not larger than a predefined time, repeating step ii),
- and if the motor of the vehicle is stopped and the first timer is larger than a predefined time, deciding that a brake disk wiping needs be performed, and continuing with step b);
wherein step b) comprises waiting (102) a second predefined period after the car is started again when leaving the parking facility, by performing the following sequence of steps:
iii) determining whether the motor of the vehicle is running,
- and if the motor of the vehicle is not running, repeating step iii),
- and if the motor of the vehicle is running, starting a second timer, and continuing with step iv);
iv) determining whether a value of the second timer is larger than an second predefined period,
- and if the value of the second timer is not larger than the second predefined value, repeating step iv);
- and if the value of the second timer is larger than the second predefined value, continuing with step c).

4. The method according to any of the preceding claims, wherein the vehicle is further equipped with data communication means, and
wherein step a) comprises determining past or actual position information of the vehicle from the GPS system, and obtaining weather information for the past or actual position via the data communication means,
- and if the weather information indicates no presence of precipitation and indicates a value of relative humidity lower than a predefined humidity level at the past or actual position of the vehicle, repeating step a),
- and if the weather information indicates a presence of precipitation or a value of relative humidity larger than a predefined humidity level at the past or actual position of the vehicle, deciding that a brake disc wiping needs to be performed.

5. The method of claim 4, wherein the data communication means comprises connected vehicle technology.

6. The method of claim 4 or 5, wherein step b) comprises waiting (102) until the motor of the vehicle is switched off, and waiting until the motor is switched on again.

7. The method according to any of the preceding claims, wherein the vehicle further comprises a sound system, and wherein waiting (102) of step b) further comprises the following step:
v) determining whether the sound system is active and whether a volume of the sound system is above a predefined value;
- and if the sound system is not active or the volume is not above the predefined value, repeating step v),
- and if the sound system is active and the volume is above the predefined value, continuing with step c).

8. The method according to claim 2, wherein determining whether the vehicle is at a car wash facility comprises:
- retrieving an actual position of the vehicle from the GPS system, and
- retrieving point of interest information from the GPS system, and
- determining whether the point of interest at the actual position is a car wash.

9. The method according to claim 3, wherein determining whether the vehicle is at a parking facility comprises:
- retrieving an actual position of the vehicle from the GPS system, and
- retrieving point of interest information from the GPS system, and
- determining whether the point of interest at the actual position is a parking facility.

## Patentansprüche

1. Verfahren zum Instandhalten der Bremsen eines Fahrzeugs, das mit einem entkoppelten Brake-by-Wire-Bremsensystem ausgestattet ist, wobei das Fahrzeug ferner ein GPS-System umfasst, wobei das Verfahren mindestens die folgenden Schritte umfasst:
a) Bestimmen (101), ob ein Abwischen der Bremsscheiben durchgeführt werden muss, auf der Grundlage von Informationen, die von dem GPS-System erhalten werden, und falls ein Abwischen der Bremsscheiben durchgeführt werden muss, Fortfahren mit Schritt b) oder c),
b) Warten (102) auf einen geeigneten Moment, um das Abwischen der Bremsscheiben durchzuführen, indem gewartet wird, bis eine vordefinierte Bedingung erfüllt ist, und wenn die vordefinierte Bedingung erfüllt ist, Fortfahren mit Schritt c);
c) Durchführen (103) des Abwischens der Bremsscheiben.

2. Verfahren nach Anspruch 1,
wobei der Schritt a) das Bestimmen (101) unter Verwendung des GPS-Systems, ob sich das Fahrzeug in einer Autowaschanlage befindet, umfasst,
- und falls sich das Fahrzeug nicht in einer Autowaschanlage befindet, Wiederholen von Schritt a),
- und falls sich das Fahrzeug in einer Autowaschanlage befindet, Starten eines Zeitgebers und Entscheiden, dass ein Abwischen der Bremsscheiben durchgeführt werden muss, und Fortfahren mit Schritt b) ;
wobei der Schritt b) das Wiederholen des Bestimmens (102), ob eine Wählhebelanzeige anders als neutral ist oder ob ein Bremspedal gedrückt ist oder ob ein Wert des Zeitgebers größer als ein vordefinierter Wert ist, bis eine dieser Bedingungen erfüllt ist, umfasst und dann Fortfahren mit Schritt c).

3. Verfahren nach Anspruch 1 oder 2,
wobei Schritt a) das Bestimmen (101) unter Verwendung des GSP-Systems, ob sich das Fahrzeug in einer Parkgarage befindet, und das Bestimmen, ob eine Fernbedienungsparkfunktion aktiviert ist, umfasst,
- und falls sich das Fahrzeug nicht in einer Parkgarage befindet oder die Fernbedienungsparkfunktion nicht aktiviert ist, Wiederholen von Schritt a),
- und falls sich das Fahrzeug in einer Parkgarage befindet und die Fernbedienungsparkfunktion aktiviert ist, Durchführen der folgenden Abfolge von Schritten:
i) Starten des Zeitgebers;
ii) Bestimmen, ob ein Motor des Fahrzeugs angehalten hat und ob ein Wert des ersten Zeitgebers größer ist als ein erster vorbestimmter Wert;
- und falls der Motor des Fahrzeugs nicht angehalten hat oder der erste Zeitgeber nicht größer als eine vordefinierte Zeit ist, Wiederholen von Schritt ii),
- und falls der Motor des Fahrzeugs angehalten hat und der erste Zeitgeber größer als eine vorgegebene Zeit ist, Entscheiden, dass ein Abwischen der Bremsscheiben durchgeführt werden muss, und Fortfahren mit Schritt b);
wobei Schritt b) das Abwarten (102) einer zweiten vordefinierten Zeitdauer, nachdem das Auto wieder gestartet worden ist, wenn es die Parkgarage verlässt, umfasst, indem die folgende Abfolge von Schritten durchgeführt wird:
iii) Bestimmen, ob der Motor des Fahrzeugs läuft,
- und falls der Motor des Fahrzeugs nicht läuft, Wiederholen von Schritt iii),
- und falls der Motor des Fahrzeugs läuft, Starten eines zweiten Zeitgebers und Fortfahren mit Schritt iv);
iv) Bestimmen, ob ein Wert des zweiten Zeitgebers größer ist als eine zweite vordefinierte Zeitdauer,
- und falls der Wert des zweiten Zeitgebers nicht größer ist als der zweite vordefinierte Wert, Wiederholen von Schritt iv);
- und falls der Wert des zweiten Zeitgebers größer ist als der zweite vordefinierte Wert, Fortfahren mit Schritt c).

4. Verfahren nach einem der vorhergehenden Ansprüche, wobei das Fahrzeug ferner mit Datenkommunikationsmitteln ausgestattet ist und
wobei Schritt a) das Bestimmen früherer und aktueller Positionsinformationen des Fahrzeugs von dem GPS-System und das Erhalten von Wetterinformationen für die frühere oder die aktuelle Position über die Datenkommunikationsmittel umfasst,
- und falls die Wetterinformationen keine Anwesenheit von Niederschlag angeben und einen Wert der relativen Luftfeuchtigkeit, der niedriger als ein vordefiniertes Luftfeuchtigkeitsniveau ist, an der früheren oder aktuellen Position des Fahrzeugs angeben, Wiederholen von Schritt a),
- und falls die Wetterinformationen die Anwesenheit von Niederschlag oder einen Wert der relativen Luftfeuchtigkeit, der größer als ein vordefiniertes Luftfeuchtigkeitsniveau ist, an der früheren oder aktuellen Position des Fahrzeugs angeben, Entscheiden, dass ein Abwischen der Bremsscheiben durchgeführt werden muss.

5. Verfahren nach Anspruch 4, wobei die Datenkommunikationsmittel verbundene Fahrzeugtechnologie umfassen.

6. Verfahren nach Anspruch 4 oder 5, wobei Schritt b) das Warten (102), bis der Motor des Fahrzeugs ausgeschaltet ist, und das Warten, bis der Motor des Fahrzeugs wieder eingeschaltet ist, umfasst.

7. Verfahren nach einem der vorhergehenden Ansprüche, wobei das Fahrzeug ferner eine Lautsprecheranlage umfasst und wobei das Warten (102) in Schritt b) ferner den folgenden Schritt umfasst:
v) Bestimmen, ob die Lautsprecheranlage aktiv ist und ob die Lautstärke der Lautsprecheranlage höher als ein vordefinierter Wert ist;
- und falls die Lautsprecheranlage nicht aktiv ist oder die Lautstärke nicht höher als der vordefinierte Wert ist, Wiederholen von Schritt v),
- und falls die Lautsprecheranlage aktiv ist und die Lautstärke höher als der vordefinierte Wert ist, Fortfahren mit Schritt c).

8. Verfahren nach Anspruch 2, wobei das Bestimmen, ob sich das Fahrzeug in einer Autowaschanlage befindet, Folgendes umfasst:
- Abrufen einer aktuellen Position des Fahrzeugs von dem GPS-System und
- Abrufen von Informationen über interessierende Punkte von dem GPS-System und
- Bestimmen, ob der interessierende Punkt an der aktuellen Position eine Autowaschanlage ist.

9. Verfahren nach Anspruch 3, wobei das Bestimmen, ob sich das Fahrzeug in einer Parkgarage befindet, Folgendes umfasst:
- Abrufen einer aktuellen Position des Fahrzeugs von dem GPS-System und
- Abrufen von Informationen über interessierende Punkte von dem GPS-System und
- Bestimmen, ob der interessierende Punkt an der aktuellen Position eine Parkgarage ist.

## Revendications

1. Procédé pour maintenir en état des freins d'un véhicule équipé d'un système de freinage découplé de type à commande électrique, le véhicule comprenant en outre un système GPS, le procédé comprenant au moins les étapes consistant à :
a) déterminer (101) si un essuyage de disques de frein a besoin d'être effectué en fonction d'informations obtenues à partir du système GPS et, si un essuyage de disques de frein a besoin d'être effectué, poursuivre avec l'étape b) ou c),
b) attendre (102) un moment opportun pour effectuer l'essuyage de disques de frein en attendant qu'une condition prédéfinie soit remplie et, lorsque la condition prédéfinie est remplie, poursuivre avec l'étape c) ;
c) effectuer (103) l'essuyage de disques de frein.

2. Procédé selon la revendication 1,
dans lequel l'étape a) comprend l'étape consistant à déterminer (101), à l'aide du système GPS, si le véhicule se trouve dans un lieu de lavage de voitures,
- et, si le véhicule ne se trouve pas dans un lieu de lavage de voitures, répéter l'étape a),
- et, si le véhicule se trouve dans un lieu de lavage de voitures, déclencher un chronomètre et décider qu'un essuyage de disques de frein a besoin d'être effectué, et poursuivre avec l'étape b) ;
dans lequel l'étape b) comprend l'étape consistant à déterminer de façon répétée (102) si une plage de transmission du véhicule est dans une position autre qu'au point mort, ou si une pédale de frein est enfoncée, ou si une valeur du chronomètre est supérieure à une valeur prédéfinie, jusqu'à ce que l'une quelconque de ces conditions soit remplie, puis poursuivre avec l'étape c).

3. Procédé selon la revendication 1 ou 2,
dans lequel l'étape a) comprend l'étape consistant à déterminer (101), à l'aide du système GSP, si le véhicule se trouve dans un lieu de stationnement, et déterminer si une fonction de stationnement piloté à distance est activée,
- et, si le véhicule ne se trouve pas dans un lieu de stationnement ou la fonction de stationnement piloté à distance n'est pas activée, répéter l'étape a),
- et, si le véhicule se trouve dans un lieu de stationnement et la fonction de stationnement piloté à distance est activée, exécuter la séquence d'étapes suivantes consistant à :
i) déclencher un premier chronomètre ;
ii) déterminer si un moteur du véhicule est coupé ou si une valeur du premier chronomètre est supérieure à une première valeur prédéfinie ;
- et, si le moteur du véhicule n'est pas coupé ou le premier chronomètre n'est pas supérieur à un temps prédéfini, répéter l'étape ii),
- et, si le moteur du véhicule est coupé et le premier chronomètre est supérieur à un temps prédéfini, décider qu'un essuyage de disques de frein a besoin d'être effectué, et poursuivre avec l'étape b) ;
dans lequel l'étape b) comprend l'étape consistant à attendre (102) une deuxième période prédéfinie suite à un redémarrage de la voiture lorsqu'elle quitte le lieu de stationnement, en exécutant la séquence d'étapes suivantes consistant à :
iii) déterminer si le moteur du véhicule tourne,
- et, si le moteur du véhicule ne tourne pas, répéter l'étape iii),
- et, si le moteur du véhicule tourne, déclencher un deuxième chronomètre, et poursuivre avec l'étape iv) ;
iv) déterminer si une valeur du deuxième chronomètre est supérieure à une deuxième période prédéfinie,
- et, si la valeur du deuxième chronomètre n'est pas supérieure à la deuxième valeur prédéfinie, répéter l'étape iv) ;
- et, si la valeur du deuxième chronomètre est supérieure à la deuxième valeur prédéfinie, poursuivre avec l'étape c).

4. Procédé selon l'une quelconque des revendications précédentes, dans lequel le véhicule est en outre équipé de moyens de communication de données, et
dans lequel l'étape a) comprend les étapes consistant à déterminer des informations sur une position passée ou actuelle du véhicule à l'aide du système GPS, et obtenir des informations météorologiques pour la position passée ou actuelle via les moyens de communication de données,
- et, si les informations météorologiques indiquent l'absence de précipitations et indiquent une valeur d'humidité relative inférieure à un niveau d'humidité prédéfini à la position passée ou actuelle du véhicule, répéter l'étape a),
- et, si les informations météorologiques indiquent la présence de précipitations ou une valeur d'humidité relative supérieure à un niveau d'humidité prédéfini à la position passée ou actuelle du véhicule, décider qu'un essuyage de disques de frein a besoin d'être effectué.

5. Procédé selon la revendication 4, dans lequel les moyens de communication de données comprennent une technologie de véhicule connecté.

6. Procédé selon la revendication 4 ou 5, dans lequel l'étape b) comprend l'étape consistant à attendre (102) l'extinction du moteur du véhicule, et attendre la remise en marche du moteur.

7. Procédé selon l'une quelconque des revendications précédentes, dans lequel le véhicule comprend en outre un système audio, et dans lequel l'étape consistant à attendre (102) de l'étape b) comprend en outre l'étape consistant à :
v) déterminer si le système audio est actif et si un volume du système audio est supérieur à une valeur prédéfinie ;
- et, si le système audio n'est pas actif ou le volume n'est pas supérieur à la valeur prédéfinie, répéter l'étape v),
- et, si le système audio est actif et le volume est supérieur à la valeur prédéfinie, poursuivre avec l'étape c).

8. Procédé selon la revendication 2, dans lequel l'étape consistant à déterminer si le véhicule se trouve dans un lieu de lavage de voitures comprend les étapes consistant à :
- récupérer une position actuelle du véhicule à partir du système GPS, et
- récupérer des informations sur un point d'intérêt à partir du système GPS, et
- déterminer si le point d'intérêt à la position actuelle est une station de lavage de voitures.

9. Procédé selon la revendication 3, dans lequel l'étape consistant à déterminer si le véhicule se trouve dans un lieu de stationnement comprend les étapes consistant à :
- récupérer une position actuelle du véhicule à partir du système GPS, et
- récupérer des informations sur un point d'intérêt à partir du système GPS, et
- déterminer si le point d'intérêt à la position actuelle est un lieu de stationnement.
